# EUROPÄISCHE PATENTSCHRIFT

(11) **EP 0 720 897 B1**
(45) Veröffentlichungstag und Bekanntmachung des Hinweises auf die Patenterteilung: **20.05.1998**
(21) Anmeldenummer: 95120521.0
(22) Anmeldetag: 23.12.1995
(51) Int. Cl.: B29B 17/00

(54) **Verfahren zum Herstellen von Agglomerat aus Kunststoffabfällen**
Method for reshaping plate-like elements
Procédé pour fabriquer un agglomérat en partant de déchets en matière plastique

(30) Priorität: 05.01.1995 DE 19500174
(43) Veröffentlichungstag der Anmeldung: 10.07.1996
(73) Patentinhaber: ERMAFA Kunststofftechnik Chemnitz GmbH & Co., 09114 Chemnitz (DE)
(72) Erfinder: Wende, Peter, Dipl.-Ing., 09119 Chemnitz (DE); Mehnert, Peter, 09130 Chemnitz (DE)
(74) Vertreter: Wystemp, Gerd, Dipl.-Ing.

(56) Entgegenhaltungen:
- EP-A- 0 417 761
- WO-A-92/18312
- DE-A- 2 439 783
- DE-B- 1 262 008

## Beschreibung

### Technisches Gebiet

Die Erfindung betrifft ein Verfahren zum Herstellen von Agglomerat aus Kunststoffabfällen unterschiedlicher Form und Abmessungen,insbesondere aus Gemischen verschiedener und/oder verschmutzter Kunststoffe und/oder mit Beimengungen anderer Stoffe.

### Stand der Technik

Es sind Verfahren zum Zerkleinern und Agglomerieren bekannt,bei denen die Verfahrensschritte Beschicken,Zerkleinern und Agglomerieren in einem Agglomerator durchgeführt werden.Dabei hat sich gezeigt,daß bei der Verarbeitung von verschmutzten und gemischten Kunststoffabfällen auf Grund ihrer unterschiedlichen stofflichen Zusammensetzung,ihrer unterschiedlichen geometrischen Formen,den unterschiedlichen Anteilen an Fremdstoffen und den großen Schüttdichteschwankungen von Charge zu Charge ein reproduzierbarer automatischer Ablauf des gesamten Agglomerierprozesses und eine gute Agglomeratqualität nur sehr schwer zu erzielen sind.Über Jahre gewonnene persönliche Erfahrungen des Bedienpersonals und Einmaschinenbedienung sind für den gegenwärtigen technischen Stand bei der Verarbeitung von verschmutzten und gemischten Kunststoffabfällen überwiegend kennzeichnend.

### Darstellung der Erfindung

Das durch die Erfindung zu lösende Problem besteht darin ein Verfahren nachzuweisen,mit dem es möglich ist die beschriebenen Kunststoffmaterialien im reproduzierbaren Prozeß wirtschaftlicher und mit guter Agglomeratqualität herzustellen.

Das genannte Problem wird durch das in Anspruch 1 beschriebene Verfahren gelöst.Unabhängig von den Erfahrungen des Bedienpersonals werden im reproduzierbarem automatischen Verfahrensablauf höhere Durchsatzmengen bei gleichbleibend guter Agglomeratqualität erzielt.Von einer Bedienperson können mehrere Agglomeriereinrichtungen gleichzeitig bedient werden,wodurch die Personalkosten sinken. Vorteilhafte Ausgestaltungen der Erfindung sehen das zeitabhängige Dosieren entsprechend dem auf die größtmögliche Schüttdichte und den größtmöglichen Motorstrom des elektromotorischen Antriebes abgestimmten Sollwertvolumen vor. Eine andere Ausgestaltung der Erfindung besteht darin,daß die Sollwertzeit für das Zerkleinern und Agglomerieren auf die kleinstmögliche Schüttdichte und das größtmögliche Sollwertvolumen der Kunststoffabfälle in dem Dosierbehälter abgestimmt ist.Dadurch kann sowohl die größtmögliche Menge an Kunststoffabfällen verarbeitet als auch bei verzögertem Agglomerieren infolge geringer Schüttdichte eine gleichbleibend gute Agglomeratqualität erzielt werden.
Den gleichen Zielen,nämlich der hohen Durchsatzmenge und der wiederholbar gleichguten Agglomeratqualität,dienen weitere Ausgestaltungen des erfindungsgemäßen Verfahrens, nach denen in Abhängigkeit von der Konsistenz der zu verarbeitenden Kunststoffabfälle während des Agglomerierens wiederholt Wasser eingespritzt und der Trocknungsprozeß beendet wird.Dazu können abgeleitete Werte wie die Motorstromaufnahme des elektromotorischen Antriebes oder die Massetemperatur verwendet werden.

### Kurze Beschreibung der Zeichnungen

- Fig.1:: Agglomerator in Ansicht,
- Fig.2:: Seitensicht gemäß Fig.1,
- Fig.3:: Verfahrensablaufdiagramm.

### Bester Weg zur Ausführung der Erfindung

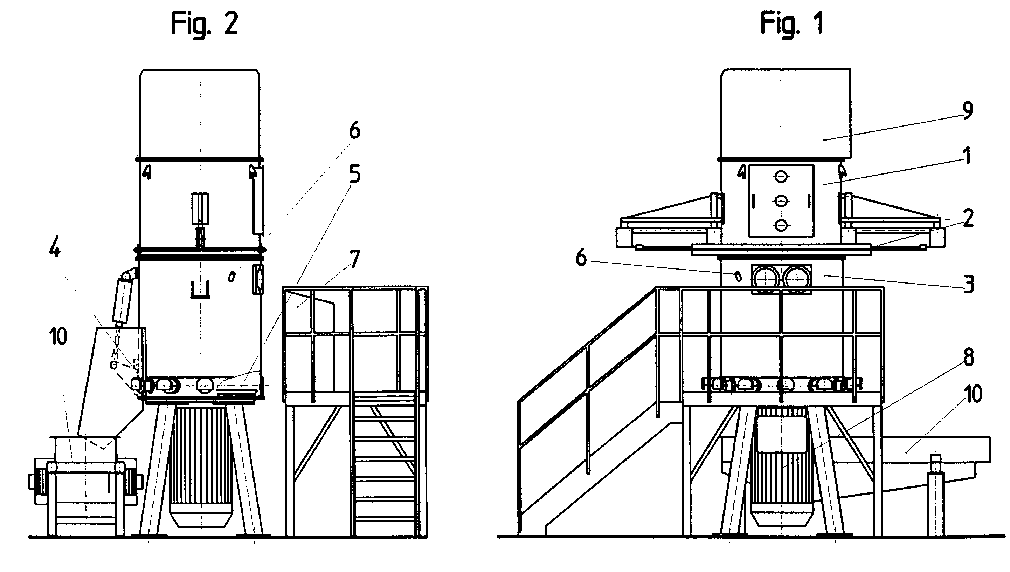

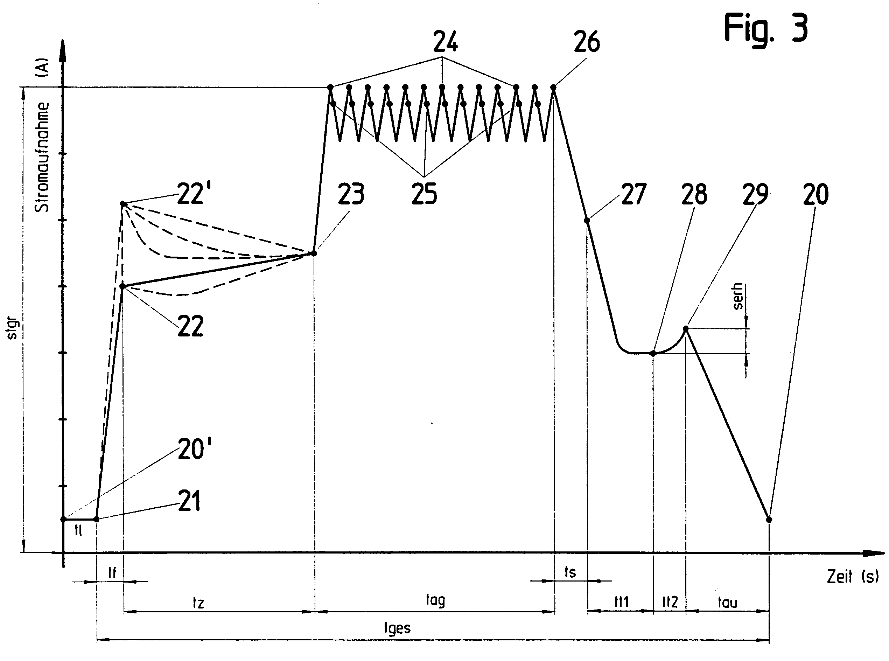

In den Fig.1 und Fig.2 ist ein Agglomerator dargestellt,dem mittels einer nicht gezeigten Zuführeinrichtung,beispielsweise eines Förderbandes,einer Kratzkette oder eines Schneckenförderers,durch die Beschickungsöffnung 9 Kunststoffabfälle unterschiedlicher Form und Abmessungen,insbesondere aus Gemischen verschiedener und/oder verschmutzter Kunststoffe und/oder mit Beimengungen anderer Stoffe zugeführt werden.
Die Kunststoffabfälle gelangen in den Dosierbehälter 1,bis in diesem ein eingestelltes Sollwertvolumen erreicht ist und die Beschickung unterbrochen wird.Dazu dient ein einstellbarer Füllstandsmelder.Die Ermittlung des maximalen Sollwertvolumens in dem Dosierbehälter 1 erfolgt in Abstimmung mit dem größtmöglichen Motorstrom des elektromotorischen Antriebes 8,eines Drehstromkurzschlußläufers,und kann am Bedienpult 7 eingestellt werden.kann.Nach Öffnen der beiden pneumatisch betätigten Schieber 2 fallen die Kunststoffabfälle schwerkraftbedingt in den zylindrischen Behälter 3 und füllen diesen.Der von dem elektromotorischen Antrieb 8 angetriebene Schneidrotor 5 zerkleinert zunächst die Kunststoffabfälle und agglomeriert sie im Anschluß daran,wobei beide Bearbeitungsphasen ineinander übergehen.Während des Agglomerierens werden über eine Düse 6 mehrfach kurzzeitig auf die Kunststoffabfälle gerichtete Wasserstrahlen in den zylindrischen Behälter 3 eingespritzt.Nach Beendigung des Agglomerierens wird über die gleiche Düse 6 Schockwasser zugesetzt,was zu einem Erstarren des Agglomerates führt.Nach Verschluß der Düse 6 beginnt die Trocknung und Nachzerkleinerung des Agglomerates durch den Schneidrotor 5,wodurch es die gewünschte,für die Weiterverarbeitung geeignete Struktur erhält.Nach Öffnen der pneumatisch betätigten Austragsklappe 4 fällt das Agglomerat schwerkraftbedingt auf eine Abtransporteinrichtung 10,beispielsweise eine Schwingrinne.Das Schließen der Austragsklappe 10 kann als Signal für das Öffnen der Schieber 2 und den Beginn des nachfolgenden Bearbeitungs prozesses genutzt werden,da zwischenzeitlich das Beschicken des Dosierbehälters 1 durch die Beschickungsöffnung 9 erneut erfolgt ist.Das Verfahren zum Herstellen von Agglomerat aus Kunststoffabfällen wird anhand des Diagramms gemäß Fig.3 beschrieben,in dem die Stromaufnahme,gemessen in Ampere,des als Drehstromkurzschlußläufer ausgebildeten elektromotorischen Antriebes 8 über der Zeit,gemessen in Sekunden,aufgetragen ist.Nach Prozeßende des vorhergehenden Prozesses 20' kann eine Leerzeit tl bis zum Beginn des Füllens 21 und der Füllzeit tf zwischengeschaltet sein. Während der Füllzeit tf steigt die Stromaufnahme des elektromotorischen Antriebes 8 bis zum Ende des Füllens 22;22' in Abhängigkeit von der Art,Größe und Form der zu verarbeitenden Kunststoffabfälle in unterschiedlichem Maße an.Entsprechend unterschiedlich ist der Kurvenverlauf der Stromaufnahme während der Zerkleinerungszeit tz bis zum Beginn des Agglomerierens 23.Er kann sowohl steigende als auch sinkende Tendenz haben.Mit dem Beginn des Agglomerierens 23 und der Agglomerierzeit tag ist eine schnell steigende Stromaufnahme des elektromotorischen Antriebes 8 entsprechend der Konsistenz,insbesondere der Viskosität,der zu verarbeitenden Kunststoffe verbunden.Sie steigt bis zu dem Stromaufnahmegrenzwert stgr,der im Bereich zwischen 70% und 90% des Kippmomentes des als Drehstromkurzschlußläufer ausgebildeten elektromotorischen Antriebes 8 eingestellt wird. Es ist auch möglich einen eingestellten Sollwert der Massetemperatur für diesen Zweck zu nutzen.Das Erreichen des Stromaufnahmegrenzwertes stgr löst durch Öffnen eines Magnetventils den Beginn des kurzzeitigen Wassereindüsens 24 aus,was infolge der damit erzielten Konsistenzänderung der zu verarbeitenden Kunststoffabfälle zu einem schlagartigen Abfall der Stromaufnahme unter den Stromaufnahmegrenzwert stgr führt.Nach Unterschreitung des Stromaufnahmegrenzwertes stgr wird das Magnetventil sofort wieder geschlossen und das Ende der Wassereindüsung 25 über die Düse 6 erreicht.Überschreitung und Unterschreitung des Stromaufnahme grenzwertes stgr erfolgt beispielsweise innerhalb einer Echtzeit von etwa 3 bis 4 Sekunden.Das Wassereindüsen wird während der Agglomerierzeit tag so oft wiederholt,wie der Stromaufnahmegrenzwert stgr erreicht oder überschritten wird.Mit Beendigung des Agglomerierens und Beginn des Schockens 26 wird über die gesamte Schockzeit ts bis zum Ende des Schockens und Beginn der ersten Trockenphase 27, zweckmäßigerweise über die Düse 6,Schockwasser zur Einwirkung mit den agglomerierten Kunststoffabfälle gebracht. Während der anschließenden Trockenzeit tt1 sinkt die Stromauf nahme auf einen Minimalwert,der gleichzeitig den Beginn der Trockenzeit tt2 charakterisiert.Der Trocknungsprozeß über die Trockenzeiten tt1;tt2 ist mit einem Nachzerkleinern des Agglomerates verbunden.Der Beginn der zweiten Trockenphase 28 entspricht einem erneuten Angelieren des Agglomerates und einem mit der damit verbundenen Konsistenzänderung verbundenen Ansteigen der Stromaufnahme.Der im Bereich von mindestens 5% und höchstens 20% einstellbare Wert der Stromerhöhung sehr gegenüber dem zu Beginn der zweiten Trockenphase 28 erreichten Minimalwert wird zur Begrenzung der Trockenzeit tt2 bzw. für das Ende der zweiten Trockenphase und Beginn des Austragens 29 genutzt. Während der Austragszeit tau erfolgt das Austragen des Agglomerates bis zum Prozeßende 20.

### Gewerbliche Anwendbarkeit

Die Erfindung ist anwendbar beim Recycling von Kunststoffabfällen unterschiedlicher Form und Abmessungen,insbesondere von Gemischen aus verschiedenen und/oder verschmutzten Kunststoffen und oder mit Beimengungen anderer Stoffe. Solche Abfälle stammen beispielsweise aus Haushaltsammlungen.

## Patentansprüche

1. Verfahren zum Herstellen von Agglomerat aus Kunststoffabfällen unterschiedlicher Form und Abmessungen,insbesondere aus Gemischen aus verschiedenen und/oder verschmutzten Kunststoffen und/oder mit Beimengungen anderer Stoffe,bei dem die Kunststoffe dosiert,diskontinuierlich dem Behälter (3) eines Agglomerators zugeführt und mit einem darin um eine senkrechte Achse umlaufenden Schneidrotor (5) zerkleinert und agglomeriert werden und das Agglomerat anschließend gekühlt und ausgetragen wird,
**dadurch gekennzeichnet, daß**
- eine Charge der Kunststoffabfälle in einem Dosierbehälter (1) bis zum Erreichen eines einstellbaren Sollwertvolumens bereitgestellt wird,
- die Charge dem Behälter (3) des Agglomerators nach Beendigung des Austragens des Agglomerates der vorherigen Charge zugeführt wird,
- während des Agglomerierens,in Abhängigkeit von der erreichten Viskosität des Agglomerates,über eine Düse (6) wiederholt kurzzeitig Wasser in den Behälter (3) eingespritzt wird,
- nach Beendigung des Agglomerierens Schockwasser über die Düse (6) bis zum Erstarren des Agglomerates in den Behälter (3) eingebracht wird,
- das Agglomerat in Abhängigkeit von dessen erreichter Viskosität getrocknet und durch den Schneidrotor (5) nachzerkleinert wird.

2. Verfahren nach Anspruch 1,
**dadurch gekennzeichnet, daß**
das Sollwertvolumen in dem Dosierbehälter (1) auf die größtmögliche Schüttdichte der Kunststoffabfälle und den größtmöglichen Sollwert des Motorstromes des elektromotorischen Antriebes (8) des Schneidrotors (5) abgestimmt wird.

3. Verfahren nach den Ansprüchen 1 oder 2,
**dadurch gekennzeichnet, daß**
das Zerkleinern und Agglomerieren nach einer auf die kleinstmögliche Schüttdichte und das größtmögliche Sollwertvolumen der Kunststoffabfälle in dem Dosierbehälter (1) abgestimmten Sollwertzeit erfolgt.

4. Verfahren nach einem der Ansprüche 1 bis 3,
**dadurch gekennzeichnet, daß**
die das wiederholte kurzzeitige Einspritzen von Wasser während des Agglomerierens regelnden,von der Viskosität des Agglomerates abhängigen Sollwerte einstellbaren Stromaufnahmegrenzwerten (stgr) zwischen mindestens 70% und höchstens 90% des Kippmomentes des als Drehstromkurzschlußläufer ausgebildeten elektromotorischen Antriebes (8) des Schneidrotors (5) entsprechen.

5. Verfahren nach Anspruch 4,
**dadurch gekennzeichnet, daß**
die das Trocknen und Nachzerkleinern des Agglomerates beendenden,von dessen Viskosität abhängigen Sollwerte im Bereich von mindestens 5% und höchstens 20% einstellbaren Stromerhöhungen (serh) des elektromotorischen Antriebes (8) des Schneidrotors (5) liegen.

6. Verfahren nach einem der Ansprüche 1 bis 3,
**dadurch gekennzeichnet, daß**
die von der Viskosität des Agglomerates abhängigen Sollwerte zur Steuerung des wiederholten kurzzeitigen Einspritzens von Wasser während des Agglomerierens gemessenen einstellbaren Temperaturgrenzwerten des Agglomerates entsprechen.

7. Verfahren nach Anspruch 6,
**dadurch gekennzeichnet, daß**
die das Trocknen und Nachzerkleinern des Agglomerates beendenden,von dessen Viskosität abhängigen Sollwerte gemessenen einstellbaren Temperaturgrenzwerten des Agglomerates entsprechen.

## Claims

1. A process for making agglomerate from plastic waste of different shapes and dimensions, in particular of mixtures consisting of different and/or contaminated plastic materials and/or impurities of other materials, in which the plastic materials are fed in a metered and batchwise manner into the receptacle (3) of an agglomerating unit, in which the said plastic materials are reduced in size by means of a cutting rotor (5) rotating around a vertical axle, in which the said plastic materials are agglomerated, in which the said plastic materials are chilled, and from which the agglomerate is then discharged,
**characterized in that**
- a charge of the plastic waste is fed into a metering tank (1) until an adjustable specified volume is reached,
- the charge is fed into the receptacle (3) of the agglomerating unit after the completion of the discharge of the agglomerate of the previous charge,
- during the agglomerating operation and depending upon the agglomerate viscosity attained, water is repeatedly injected into the receptacle (3) for a short time via a nozzle (6),
- after the completion of the agglomerating operation, chilling water is fed into the receptacle (3) via the nozzle (6), until the agglomerate consolidates,
- the agglomerate is dried depending upon its viscosity attained, and in that the said agglomerate is subjected to a post-reduction operation performed by means of a cutting rotor (5).

2. A process according to claim 1,
**characterized in that**
the specified volume in the metering tank (1) is adjusted to the highest possible bulk density of the plastic waste and the highest possible specified value of the motor current of the electromotive drive (8) of the cutting rotor (5).

3. A process according to claims 1 or 2,
**characterized in that**
the size-reduction and agglomerating operations take place according to a specified time adjusted to the lowest possible bulk density and the highest possible specified volume of the plastic waste in the metering tank (1).

4. A process according to one of the claims 1 to 3,
**characterized in that**
the specified values controlling the repeated short-time injection of water during the agglomerating operation and depending upon the viscosity of the agglomerate correspond to adjustable current input limiting values (stgr) ranging from a minimum of 70 % to a maximum of 90 % of the breakdown torque of the electromotive drive (8) of the cutting rotor (5) executed in form of a three-phase squirrel-cage motor.

5. A process according to claim 4,
**characterized in that**
the specified values finishing the drying and post-reduction of the agglomerate and depending upon the viscosity of the said agglomerate are ranging from a minimum of 5 % up to a maximum of 20 % adjustable current increases (serh) of the electromotive drive (8) of the cutting rotor (5).

6. A process according to one of the claims 1 to 3,
**characterized in that**
the specified values depending upon the viscosity of the agglomerate and used for controlling the repeated short-time injection of water during the agglomerating operation correspond to measured and adjustable temperature limiting values of the said agglomerate.

7. A process according to claim 6,
**characterized in that**
the specified values finishing the drying and post-reduction of the agglomerate and depending upon the viscosity of the said agglomerate correspond to measured and adjustable temperature limiting values of the said agglomerate.

## Revendications

1. Un procédé destiné à la production d'agglomérat à partir de déchets plastiques de différentes formes et dimensions, composés notamment de mélanges comportant des matières plastiques différentes et/ou contaminées et/ou comportant des impuretés en provenance d'autres matières, procédé dans lequel les matières plastiques sont amenées de manière dosée et discontinue au réservoir (3) d'une installation d'agglomération et où lesdites matières plastiques sont broyées et agglomérées au moyen d'un rotor de découpage (5) se trouvant à l'intérieur de ladite installation d'agglomération et se tournant autour d'une axe vertical, et où l'agglomérat et ensuite refroidi et déchargé,
**caractérisé en ce que**
- une charge des déchets plastiques est amenée à un réservoir doseur (1) jusqu'au moment où un volume de consigne réglable est atteint,
- une charge est amenée au réservoir (3) de l'installation d'agglomération après la fin de la décharge de l'agglomérat de la charge précédente,
- de l'eau est injectée à plusieurs reprises et pour de courtes durées dans le réservoir (3), par l'intermédiaire d'une buse (6), et ceci pendant le processus d'agglomération et en fonction de la viscosité atteinte de l'agglomérat,
- de l'eau de refroidissement est introduite dans le réservoir (3), après la fin du processus d'agglomération, par l'intermédiaire de la buse (6), et jusqu'à ce que l'agglomérat se solidifie,
- l'agglomérat est séché en fonction de sa viscosité atteinte et broyé par l'intermédiaire du rotor de découpage (5).

2. Un procédé selon la revendication 1,
**caractérisé en ce que**
le volume de consigne du réservoir doseur (1) est adapté au foisonnement le plus élevé possible des déchets plastiques et à la valeur de consigne la plus élevée possible du courant de moteur de la commande électromotrice (8) du rotor de découpage (5).

3. Un procédé selon les revendications 1 ou 2,
**caractérisé en ce que**
le broyage et l'agglomération s'effectuent en un temps de consigne adapté au foisonnement le plus faible possible et au volume de consigne le plus élevé possible des déchets plastiques se trouvant dans le réservoir doseur (1).

4. Un procédé selon l'une des revendications 1 à 3,
**caractérisé en ce que**
les valeurs de consigne réglant l'injection d'eau répétée et de courte durée pendant le processus d'agglomération et dépendant de la viscosité de l'agglomérat correspondent aux valeurs limites de consommation de courant (stgr), réglables, se situant entre un minimum de 70 % et un maximum de 90 % du couple maximum de la commande électromotrice (8) du rotor de découpage (5), executée sous forme de moteur triphasé à induit en court-circuit.

5. Un procédé selon la revendication 4,
**caractérisé en ce que**
les valeurs de consigne terminant les processus de séchage et de broyage ultérieur de l'agglomérat et dépendant de la viscosité dudit agglomérat se situent dans une gamme d'augmentations de courant réglables (serh) de la commande électromotrice (8) du rotor de découpage (5), ladite gamme étant comprise entre un minimum de 5 % et un maximum de 20 %.

6. Un procédé selon l'une des revendications 1 à 3,
**caractérisé en ce que**
les valeurs de consigne dépendant de la viscosité de l'agglomérat et servant à la commande du processus d'injection d'eau répété et de courte durée pendant le processus d'agglomération, correspondent à des valeurs limites de température d'agglomérat mesurées et réglables.

7. Un procédé selon la revendication 6,
**caractérisé en ce que**
les valeurs de consigne terminant les processus de séchage et de broyage ultérieur de l'agglomérat et dépendant de la viscosité dudit agglomérat, correspondent à des valeurs limites de température d'agglomérat mesurées et réglables.
